# EUROPÄISCHE PATENTANMELDUNG

(11) **EP 2 957 892 A1**
(43) Veröffentlichungstag der Anmeldung: **23.12.2015**
(21) Anmeldenummer: 14172655.4
(22) Anmeldetag: 17.06.2014
(51) Int. Cl.: G01N 21/51, G01N 21/47

(54) **Photometriesystem und Verfahren zur Positionsbestimmung**

(71) Anmelder: Siemens Healthcare Diagnostics Products GmbH, 35041 Marburg (DE)
(72) Erfinder: Beier, Axel, 16552 Schildow (DE); Meller, Paul, 61273 WEHRHEIM (DE); Nerreter, Stefan, 15754 Heidesee OT Blossin (DE); Pryshchepna, Oksana, 63456 Hanau (DE); Steinebach, Wolfgang, 56414 Salz (DE)

(57) **Zusammenfassung**

Die Erfindung betrifft ein Photometriesystem (1) mit mindestens einem Mittel (8) zur Erzeugung eines Strahlenbündels, mindestens einer Aufnahmeposition (4) für eine Messzelle (2), mindestens einer Blende (14) und mindestens einem ersten Fotodetektor (6) und einem zweiten Fotodetektor (7), wobei das Mittel (8) zur Erzeugung eines Strahlenbündels, die Aufnahmeposition (4) der Messzelle (2), die Blende (14) und der erste Fotodetektor (6) derart angeordnet sind, dass das Strahlenbündel durch eine in der Aufnahmeposition (4) angeordnete Messzelle (2) tritt und dass nach dem Durchtritt durch eine in der Aufnahmeposition (4) angeordnete Messzelle (2) wenigstens ein erster Teil des Strahlenbündels auf die Blende (14) trifft und wobei wenigstens ein zweiter Teil des Strahlenbündels auf den ersten Fotodetektor (6) trifft und wobei das Mittel (8) zur Erzeugung eines Strahlenbündels, die Blende (14), und der erste Fotodetektor (6) relativ zu der Aufnahmeposition (4) bewegbar sind, wobei der zweite Fotodetektor (7) außerhalb des Strahlengangs des Strahlenbündels zwischen Aufnahmeposition (4) und dem ersten Fotodetektor (6) angeordnet ist.

## Beschreibung

Die Erfindung betrifft ein für ein Analysegerät geeignetes Photometriesystem mit einer Lichtquelle, einer Aufnahmeposition für eine Messzelle und einem Fotodetektor, die derart angeordnet sind, dass ein von der Lichtquelle ausgehender Lichtstrahl durch die Messzelle tritt und auf den Fotodetektor trifft.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen, in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Insbesondere können moderne Analysegeräte mit einem Photometriesystem ausgestattet sein. Mittels eines nephelometrischen Photometriesystems lässt sich beispielsweise die Konzentration feinverteilter, kolloidaler Teilchen in Flüssigkeiten oder Gasen quantitativ bestimmen. Wird eine Suspension kleiner Partikel in einen Lichtstrahl verbracht, so wird ein Teil des eintretenden Lichtes absorbiert, ein anderer Teil, auch als Primärstrahl bezeichnet, verlässt die Suspension ungestreut, und wieder ein anderer Teil wird seitlich zum eintretenden Strahl gestreut. Bei der Nephelometrie wird dieses seitlich austretende Streulicht gemessen.

Die Nephelometrie wird vor allem für den quantitativen oder qualitativen Nachweis von Analyten, beispielsweise Proteinen, eingesetzt, die mittels einer spezifischen Bindungsreaktion zwischen spezifischen Bindungspartnern, z.B. mittels Antigen-Antikörper-Bindung, nachweisbar sind.

Ein Nephelometriesystem umfasst mindestens ein Mittel zur Erzeugung eines Strahlenbündels, welches eine Lichtquelle umfasst, mindestens einen Fotodetektor sowie mindestens eine Aufnahmeposition für eine Messzelle.

Auf dem Markt existieren unterschiedliche Bauweisen, die sich in der Anordnung von Lichtquelle, Aufnahmeposition für die Messzelle und Fotodetektor unterscheiden. Siehe hierzu auch z.B. Diamandis, E.P. und Christopoulos, T.K., Immunoassay, Academic Press, 1996, Kapitel 17, S. 363 - 387. Beispielsweise kann in einer Bauweise der Fotodetektor seitlich vom von der Lichtquelle ausgesandten Lichtstrahl angeordnet sein, um das gestreute Licht in einem Winkelbereich von 90° zur Richtung des von der Lichtquelle ausgesandten Lichtstrahls zu erfassen. Dies hat den Vorteil, dass die Intensität des Streulichts relativ niedrig sein kann und die Beeinflussung der Messung durch den von der Lichtquelle ausgesandten nicht gestreuten Teil des Lichtstrahls, der als Primärstrahl bezeichnet wird, relativ gering wird.

In einer anderen Bauweise können Lichtquelle, Aufnahmeposition und Fotodetektor derart angeordnet sein, dass der Fotodetektor das gestreute Licht in Winkelbereichen um die Ausbreitungsrichtung des von der Lichtquelle ausgesandten Lichtstrahls erfasst, in denen die Intensität des Streulichts relativ hoch ist. Den Fotodetektor erreicht in dieser Geometrie jedoch nicht nur das Streulicht, sondern auch der Primärstrahl. Da jedoch nur der gestreute Teil des Lichtes zum Messergebnis beitragen soll und Licht des Primärstrahls, das auf den Detektor trifft, letztlich nur zu einer Verschlechterung des Signal-Rausch-Abstandes führt, ist für eine Optimierung des Messergebnisses eine vollständige Ausblendung des Primärstrahls erforderlich.

Hierfür werden z.B. optische Blenden eingesetzt. Diese werden mittels dünner Befestigungen, wie z.B. Drähten im Strahlengang gehalten und hinsichtlich ihrer Größe und Form so angepasst, dass sie den Primärstrahl wenigstens ausreichend, bevorzugt vollständig ausblenden, so dass möglichst ausschließlich Streulicht auf den Detektor trifft. Vorzugsweise ist das Verhältnis von Streulichtanteilen zu Primärstrahlanteilen kleiner als 0,001.

Eine wichtige Rolle bei der weiteren Optimierung des Messergebnisses und bei der Erhöhung des Signal-Rausch-Abstandes spielt, dass stets Streulicht aus dem gleichen Streuvolumen der Probe auf den Detektor geleitet wird, gemessen und/oder ausgewertet wird. Aufgrund von beispielsweise relativ großen mechanischen Toleranzen kommt es jedoch häufig bezüglich der Lage des Streuvolumens in der Probe zu einer Veränderung innerhalb einer Messung oder zwischen verschiedenen Messungen der gleichen Probe, beispielsweise bei Messung einer Reaktionskinetik. Dies tritt besonders bei Photometriesystemen auf, bei denen die Messzelle und der Fotodetektor relativ zueinander während einer Messung und/oder zwischen verschiedenen Messungen der gleichen Probe bewegt werden.

Bei bekannten Photometriesystemen wird die Position der Messzelle und damit des Streuvolumens aufgrund der Position von einzelnen mechanischen Komponenten des Photometriesystems bestimmt. Die Genauigkeit der Positionsbestimmung ist dabei stets auch von den entsprechenden mechanischen Toleranzen abhängig, was besonders bei vergleichsweise großen mechanischen Toleranzen nachteilhaft ist.

Es ist daher Aufgabe der Erfindung, ein Photometriesystem zur Verfügung zu stellen, welches eine verbesserte Messqualität bietet, indem Lichtsignale aus dem gleichen Streuvolumen der Probe gemessen werden.

**Diese Aufgabe wird erfindungsgemäß durch die im Folgenden beschriebenen Gegenstände und Verfahren gelöst.**

Es wurde gefunden, dass ein verbessertes Photometriesystem für ein Analysegerät erreicht werden kann, wenn das durch die Messzelle abgelenkte Licht auf einen zweiten Fotodetektor trifft und durch die Veränderung dieses Lichts über die Zeit die Position der Messzelle ermittelt wird, in der Messwerte aufgenommen werden sollen.

Gegenstand der vorliegenden Erfindung ist ein Photometriesystem mit mindestens einem Mittel zur Erzeugung eines Strahlenbündels, mindestens einer Aufnahmeposition für eine Messzelle, mindestens einer Blende und mindestens einem ersten Fotodetektor und einem zweiten Fotodetektor, wobei das Mittel zur Erzeugung eines Strahlenbündels, die Aufnahmeposition der Messzelle, die Blende und der erste Fotodetektor derart angeordnet sind, dass das Strahlenbündel durch eine in der Aufnahmeposition angeordnete Messzelle tritt und dass nach dem Durchtritt durch eine in der Aufnahmeposition angeordnete Messzelle wenigstens ein erster Teil des Strahlenbündels auf die Blende trifft und wobei wenigstens ein zweiter Teil des Strahlenbündels auf den ersten Fotodetektor trifft und wobei das Mittel zur Erzeugung eines Strahlenbündels, die Blende und der erste Fotodetektor relativ zu der Aufnahmeposition bewegbar sind und wobei der zweite Fotodetektor außerhalb der Mittenachse des Strahlengangs des Strahlenbündels zwischen Aufnahmeposition und dem ersten Fotodetektor angeordnet ist.

Der beschriebene Verlauf des Strahlenbündels kann insbesondere erzielt werden, wenn eine Messzelle mit ovalen oder runden Querschnitten, die mit einem wässrigen Medium, beispielsweise einer wässrigen Flüssigkeitsprobe gefüllt ist, sich bei der Etablierung des Systems in der Aufnahmeposition befindet.

Messzellen mit ovalen oder runden Querschnitten, insbesondere wenn sie mit einem flüssigen Medium, beispielsweise einer wässrigen Flüssigkeitsprobe gefüllt sind, können bekanntermaßen als Sammellinse wirken. Die Linsenwirkung der Messzelle ist bei dem Aufbau eines erfindungsgemäßen Photometriesystems stets zu beachten. Die Linseneigenschaften der Messzelle ändern sich im Allgemeinen je nach Füllzustand. Insbesondere bei einer leeren, nicht mit flüssigem Medium gefüllten Messzelle, die beispielsweise Luft enthält, kann die Wirkung der Messzelle als Sammellinse abgeschwächt oder nicht mehr vorhanden sein. Hierdurch wird der Verlauf des Strahlenbündels nach Durchtritt durch die Messzelle entsprechend verändert.

In bevorzugter Ausführungsform des erfindungsgemäßen Photometriesystems trifft durch Ablenkung des Strahlenbündels durch eine in der Aufnahmeposition angeordnete Messzelle wenigstens ein dritter Teil des Strahlenbündels auf den zweiten Fotodetektor, wobei der Anteil des dritten Teils des Strahlenbündels in Abhängigkeit der Position der in der Aufnahmeposition angeordneten Messzelle relativ zum Strahlengang des Strahlenbündels veränderlich ist.

Dies hat den Vorteil, dass mittels eines Signals des zweiten Fotodetektors die Aufnahmezeitpunkte für Messwerte durch den ersten Fotodetektor festgelegt werden können. Beispielsweise kann durch das Signal des zweiten Fotodetektors ein Steuersignal für den Start der Messwertaufnahme durch den zweiten Fotodetektors generiert werden. Alternativ können beispielsweise die einzelnen Messwerte des ersten Fotodetektors auch einer Position der Messzelle zugeordnet werden.

Dadurch kann erreicht werden, dass, insbesondere falls die Messzelle und der erste Fotodetektor relativ zueinander während einer Messung und/oder zwischen verschiedenen Messungen der gleichen Probe bewegt werden, stets Messwerte aus dem gleichen Streuvolumen der Probe ausgewählt und verglichen werden können.

In weiterer bevorzugter Ausführungsform des erfindungsgemäßen Photometriesystems erreicht bei mittiger Stellung oder bei geringfügiger Abweichung von der mittigen Stellung einer in der Aufnahmeposition angeordneten Messzelle relativ zum Strahlengang des Strahlenbündels der Anteil des ersten Teils des Strahlenbündels am Strahlenbündel seinen maximalen Wert. Bevorzugt trifft dabei der gesamte Primärstrahl auf die Blende und wird von dieser absorbiert und/oder reflektiert, und der Primärstrahl trifft somit nicht auf den ersten Fotodetektor. Dies hat beispielsweise den Vorteil, dass die Messergebnisse weiter optimiert werden und der Signal-Rausch-Abstand erhöht wird.

Aufgrund von Fluktuationen der Lichtintensität über den Querschnitt des Strahlenbündels kann der maximale Wert des ersten Teils des Strahlenbündels am Strahlenbündel beispielsweise auch bei einer Stellung einer in der Aufnahmeposition angeordneten Messzelle relativ zum Strahlengang des Strahlenbündels auftreten, die nicht exakt mittig ist, sondern von der mittigen Stellung geringfügig abweicht. Eine solche geringfügige Abweichung von der mittigen Stellung kann beispielsweise 1 mm betragen.

In weiterer bevorzugter Ausführungsform des erfindungsgemäßen Photometriesystems erreicht bei mittiger Stellung oder bei geringfügiger Abweichung von der mittigen Stellung einer in der Aufnahmeposition angeordneten Messzelle relativ zum Strahlengang des Strahlenbündels der Anteil des zweiten Teils des Strahlenbündels am Strahlenbündel seinen minimalen Wert. Bevorzugt treffen möglichst keine Anteile des dritten Teils des Strahlenbündels, die durch eine Linsenwirkung der Messzelle abgelenkt werden, auf den ersten Fotodetektor, sondern treffen möglichst vollständig auf die Blende und werden von dieser beispielsweise absorbiert und/oder reflektiert. Bevorzugt treffen diese Anteile des Strahlenbündels somit nicht auf den ersten Fotodetektor.

Aufgrund von Fluktuationen der Lichtintensität über den Querschnitt des Strahlenbündels kann der minimale Wert des zweiten Teils des Strahlenbündels am Strahlenbündel beispielsweise auch bei einer Stellung einer in der Aufnahmeposition angeordneten Messzelle relativ zum Strahlengang des Strahlenbündels auftreten, die nicht exakt mittig ist, sondern von der mittigen Stellung geringfügig abweicht. Eine solche geringfügige Abweichung von der mittigen Stellung kann beispielsweise 1 mm betragen.

In weiterer bevorzugter Ausführungsform des erfindungsgemäßen Photometriesystems erreicht bei mittiger Stellung oder bei geringfügiger Abweichung von der mittigen Stellung einer in der Aufnahmeposition angeordneten Messzelle relativ zum Strahlengang des Strahlenbündels der Anteil des ersten Teils des Strahlenbündels am Strahlenbündel seinen maximalen Wert, und der Anteil des zweiten Teils des Strahlenbündels am Strahlenbündel seinen minimalen Wert.

Dies hat den Vorteil, dass das mit dem ersten Fotodetektor aufgenommene Signal nur geringe Störanteile umfasst. Dies trägt zur weiteren Optimierung der Messergebnisse und der Erhöhung des Signal-Rausch-Abstandes bei. Das Signal des ersten Fotodetektors zeigt dabei beispielsweise einen wannenförmigen Verlauf, wobei sich das Signal mit den geringsten Störanteilen im Bereich des Wannenbodens befinden kann. Es kann vorteilhaft sein, das Signal aus dem Bereich des Wannenbodens auszuwerten.

In besonders bevorzugter Ausführungsform handelt es sich bei dem erfindungsgemäßen Photometriesystem um ein Nephelometer zur Streulichtmessung. Die Vorteile der erfindungsgemäßen Photometriesysteme sind jedoch auch bei anderen photometrischen Messungen vorteilhaft. In anderen bevorzugten Ausführungsformen handelt es sich bei dem erfindungsgemäßen Photometriesystem beispielsweise um ein Photometer zur Messung der Absorption oder um ein Turbidimeter.

Unter einem "Absorptions-Photometriesystem" ist eine Messeinheit zu verstehen, die mindestens eine Lichtquelle und mindestens einen Lichtdetektor aufweist und die so ausgestaltet ist, dass sie die Messung der Absorbanz von Licht einer bestimmten Wellenlänge oder eines bestimmten Wellenlängenbereichs in einer Probe ermöglicht. Typischerweise ist die Wellenlänge des von der Lichtquelle emittierten Lichts so gewählt, dass es von einer in der Probe nachzuweisenden Substanz, beispielsweise von einem Chromophor, absorbiert wird.

Unter einem "Turbidimeter" ist eine Messeinheit zu verstehen, die mindestens eine Lichtquelle und mindestens einen Lichtdetektor aufweist und die so ausgestaltet ist, dass sie die Messung der Absorbanz und/oder von Streulicht, das in der Probe gestreut wurde, ermöglicht. Typischerweise ist die Wellenlänge des von der Lichtquelle emittierten Lichts so gewählt, dass es von in der Probe nachzuweisenden Makromolekülen, beispielsweise von Partikelaggregaten, die infolge einer analytabhängigen Reaktion in einem Reaktionsansatz entstehen, gestreut wird und der durch die Probe hindurchtretende Primärstrahl dadurch abgeschwächt wird.

Unter einem "Nephelometer" oder "Nephelometriesystem" ist eine Messeinheit zu verstehen, die mindestens eine Lichtquelle und mindestens einen Lichtdetektor aufweist und die so ausgestaltet ist, dass sie die Messung von Streulicht, das in einer Probe gestreut wurde, ermöglicht. Typischerweise ist die Anordnung von Lichtquelle und Lichtdetektor so gewählt, dass das Streulicht messbar ist, das von in der Probe nachzuweisenden Makromolekülen, beispielsweise von Partikelaggregaten, die infolge einer analytabhängigen Reaktion in einem Reaktionsansatz entstehen, gestreut wird.

In bevorzugter Ausführungsform umfasst das Mittel zur Erzeugung eines Strahlenbündels eine Lichtquelle und eine Linse, bevorzugt eine Lichtquelle und eine Zylinderlinse. Bevorzugt ist die Linse zwischen Lichtquelle und Aufnahmeposition für die Messzelle angeordnet.

In bevorzugter Ausführungsform ist die Linse eine Sammellinse. Bevorzugt erzeugt die Sammellinse ein paralleles Strahlenbündel oder einen Fokus des Strahlenbündels in mindestens einer Richtung senkrecht zur optischen Achse des Strahlenbündels, der bevorzugt im Zentrum einer in der Aufnahmeposition angeordneten Messzelle liegt. In einer anderen bevorzugten Ausführungsform liegt der Fokus des Strahlenbündels zwischen dem Mittel zur Erzeugung eines Strahlenbündels und der Aufnahmeposition für die Messzelle, bevorzugt unmittelbar vor der Aufnahmeposition für die Messzelle.

In vorteilhafter Ausgestaltung umfasst die Lichtquelle mindestens einen Laser, eine lichtemittierende Diode (LED), eine Glühlampe und/oder eine Gasentladungslampe.

In besonders vorteilhafter Ausgestaltung umfasst die Lichtquelle mindestens eine Laserdiode. Hierdurch kann in besonders einfacher Weise ein kohärenter und kollimierter Lichtstrahl erzeugt werden, der für die Nephelometrie besonders vorteilhafte Eigenschaften hat. Beispielsweise weist der Lichtstrahl eine geringe Divergenz auf und erfährt daher über die Laufweite vergleichsweise wenig Aufweitung. Dadurch sind Primärstrahl und gestreutes Licht im Fotodetektor besonders gut voneinander abgrenzbar. Dies gilt auch nach Streuung, Bündelung oder Umlenkung des Lichtstrahls mittels Linsen und Spiegeln.

Die Verwendung von mindestens einer Laserdiode als Lichtquelle ermöglicht es in besonders einfacher Ausgestaltung, die Blende derart anzuordnen, dass der gesamte Primärstrahl der Laserdiode auf die Blende trifft. Hierdurch wird von dem ersten Fotodetektor ausschließlich Streulicht aufgenommen und zur Messung verwendet.

In weiterer vorteilhafter Ausgestaltung emittiert die Lichtquelle Licht in Lichtwellenlängenbereichen zwischen 200 nm und 1400 nm. In einer bevorzugten Ausgestaltung emittiert die Lichtquelle Licht in Lichtwellenlängenbereichen zwischen 300 und 1100 nm.

Ein Lichtstrahl oder Lichtstrahlen werden auch als Strahlenbündel bezeichnet.
Bei dem Lichtdetektor handelt es sich bevorzugt um eine Photodiode, die sichtbares Licht, in manchen Ausführungen auch IR-, oder UV-Licht durch den inneren Photoeffekt in einen elektrischen Strom bzw. eine Spannung umwandelt. Dieser Prozess wird auch als "Signalaufnahme" bezeichnet, und beispielsweise werden der elektrische Strom bzw. die Spannung auch als "Signal" bezeichnet.

Alternativ handelt es sich bei dem Lichtdetektor um einen CCD-Sensor. CCD-Sensoren bestehen aus einer Matrix oder einer Zeile mit lichtempfindlichen Photodioden. Wenn Messungen bei verschiedenen Wellenlängen durchgeführt werden sollen, kann jedes Element des CCD-Sensors als Photodetektor dienen, was den apparativen Aufbau erheblich vereinfacht.

Ebenso kann jedoch vorgesehen sein, dass es sich bei dem Lichtdetektor um eine Photozelle, einen Siliziumphotodetektor, einen Avalanchephotodetektor oder einen Photomultiplier handelt.

Die Begriffe "Lichtdetektor" und "Fotodetektor" werden im Rahmen dieser Erfindung synonym verwendet.

Der Begriff "Messwert" bezeichnet den durch einen oder mehrere Messungen ermittelten Wert einer Messgröße. Bei einer Messgröße kann es sich beispielsweise um die Intensität von Streulicht oder um die Höhe eines Signals handeln.

In vorteilhafter Ausgestaltung des Photometriesystems ist eine Sammellinse zwischen der Aufnahmeposition für eine Messzelle und dem ersten Fotodetektor angeordnet, die einen Fokus eines durch eine in der Aufnahmeposition angeordneten Messzelle hindurchtretenden Strahlenbündels erzeugt und wobei im Bereich des durch die Sammellinse erzeugten Fokus des Strahlenbündels die Blende positioniert ist. Dies bewirkt, dass das Strahlenbündel wenigstens teilweise, bevorzugt vollständig auf die Blende trifft. Dies hat den Vorteil, dass Teile des Strahlenbündels, die nicht an der Messzelle oder in der Messzelle gestreut wurden, besonders einfach auf eine Blende fokussiert und somit eliminiert werden können, wohingegen gestreute Anteile des Strahlenbündels nicht auf die Blende fokussiert werden und mittels des ersten Fotodetektors gemessen und analysiert werden können. Somit kann eine Erhöhung des Signal-Rausch-Abstandes erreicht werden.

In vorteilhafter Ausgestaltung umfasst das Photometriesystem mindestens zwei Aufnahmepositionen für jeweils eine Messzelle, wobei wenigstens das mindestens eine Mittel zur Erzeugung eines Strahlenbündels, die mindestens eine Blende und der mindestens eine erste Fotodetektor relativ zu den mindestens zwei Aufnahmepositionen bewegbar sind, vorzugsweise auf einer Kreisbahn bewegbar. Dies hat beispielsweise den Vorteil, dass ein höherer Probendurchsatz erzielt werden kann. Ferner kann es vorteilhaft sein, wenn die Aufnahmepositionen für die Messzellen ortsfest angeordnet sind. So können beispielsweise Erschütterungen und andere Beschleunigungskräfte wie beispielsweise Zentripetalkräfte, welche die Probe in der Messzelle beeinflussen können, vermieden werden. Ferner kann z.B. auch während Messungen oder zwischen Messungen auf die Proben leichter zugegriffen werden.

Ausgestaltung umfasst das Photometriesystem mindestens zwei Aufnahmepositionen für jeweils eine Messzelle, wobei wenigstens das mindestens eine Mittel zur Erzeugung eines Strahlenbündels, die mindestens eine Blende, der mindestens eine erste Fotodetektor und der mindestens eine zweite Fotodetektor relativ zu den mindestens zwei Aufnahmepositionen bewegbar sind, vorzugsweise auf einer Kreisbahn bewegbar. Dies bietet neben den oben erwähnten Vorteilen beispielsweise Vorteile für Ausführungsformen mit einem einzigen zweiten Fotodetektor und einer Mehrzahl von Aufnahmepositionen für jeweils eine Messzelle.

In bevorzugter Ausgestaltung des Photometriesystems sind die mindestens zwei Aufnahmepositionen für jeweils eine Messzelle in einer Kreisbahn, bevorzugt in mindestens zwei konzentrischen Kreisbahnen angeordnet. Dies hat beispielsweise den Vorteil, dass pro Flächeneinheit eine größere Anzahl von Aufnahmepositionen angeordnet werden können. Fernern kann hierdurch der Probendurchsatz weiter erhöht werden.

In bevorzugter Ausgestaltung des Photometriesystems ist die Aufnahmeposition zur Aufnahme einer Messzelle mit ovalen, runden, rechteckigen, halbkugelförmigen und/oder polygonen Querschnitten geeignet. Dies ist vorteilhaft, da je nach Anforderungen an das Photometriesystem und/oder dessen Messeigenschaften Messzellen mit bestimmen Querschnitten vorteilhaft sein können.

In weiterer bevorzugter Ausgestaltung des Photometriesystems umfasst das Photometriesystem mindestens eine Messzelle mit rechteckigen, polygonen, ovalen, halbkugelförmigen und/oder runden Querschnitten.

Bei der Messzelle kann es sich z.B. um eine Küvette handeln, die häufig aus Glas, Kunststoff oder Quarzglas besteht. Auch Durchflussküvetten können im erfindungsgemäßen Photometriesystem als Messzelle eingesetzt werden.

Bevorzugt handelt es bei dem Photometriesystem um ein zentriertes System, bei dem die optischen Achsen der optischen Elemente zusammenfallen. Bevorzugt breitet sich das Strahlenbündel entlang der optischen Achse aus. Bevorzugt liegt dabei die optische Achse im Bereich des Zentrums des Querschnitts des Strahlenbündels. Bevorzugt fällt die Mittenachse des Strahlengangs des Strahlenbündels mit der optischen Achse zusammen.

Ein anderer Gegenstand der Erfindung ist ein Analysegerät, welches ein erfindungsgemäßes Photometriesystem umfasst.

Die Erfindung umfasst auch ein Verfahren zur Bestimmung der Position einer in einer Aufnahmeposition angeordneten Messzelle relativ zum Strahlengang des Strahlenbündels, wobei die Bestimmung der Position der in der Aufnahmeposition angeordneten Messzelle mittels Auswertung des Signals des zweiten Fotodetektors erfolgt.

In weiterer vorteilhafter Ausgestaltung des Verfahrens zur Bestimmung der Position einer in einer Aufnahmeposition angeordneten Messzelle relativ zum Strahlengang des Strahlenbündels erfolgt die Bestimmung der Position der mittigen Stellung der in einer Aufnahmeposition angeordneten Messzelle relativ zum Strahlengang des Strahlenbündels.

In weiterer vorteilhafter Ausgestaltung des Verfahrens zur Bestimmung der Position einer in einer Aufnahmeposition angeordneten Messzelle relativ zum Strahlengang des Strahlenbündels erfolgt die Steuerung des Beginns und/oder des Endes der Signalaufnahme und/oder der Signalverarbeitung des Signals des ersten Fotodetektors mittels Auswertung des Signals des zweiten Fotodetektors. Beispielsweise kann nach Auswertung des Signals des zweiten Fotodetektors ein entsprechendes Steuersignal erzeugt werden, das den Beginn und/oder das Ende der Signalaufnahme und/oder Signalverarbeitung des Signals des ersten Fotodetektors steuert. Die Auswertung des Signals und/oder die Generierung des Steuersignals können mittels einer geeigneten Auswerteeinheit und/oder einer geeigneten Steuereinheit erfolgen.

In vorteilhafter Ausgestaltung des Verfahrens zur Bestimmung der Position einer in einer Aufnahmeposition angeordneten Messzelle relativ zum Strahlengang des Strahlenbündels wird das Verfahren mittels eines erfindungsgemäßen Photometriesystems oder mittels eines erfindungsgemäßen Analysegeräts durchgeführt.

Die Erfindung umfasst auch Verfahren zur Bestimmung der Konzentration, Menge und/oder Aktivität mindestens eines Analyten in einer Probe wobei die Probe mit einem oder mehreren Reagenzien zu einem Reaktionsansatz vermischt wird und die Änderung der Absorption und/oder der Intensität des gestreuten Lichts des Reaktionsansatzes mit einem erfindungsgemäßen Photometriesystem oder mit einem erfindungsgemäßen Analysegerät bestimmt wird, wobei die Änderung der Absorption und/oder die Änderung der Intensität des gestreuten Lichts mit der Konzentration, Menge und/oder Aktivität des Analyten korreliert.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

**Ausführungsformen der Erfindung werden anhand von Zeichnungen exemplarisch näher erläutert. Darin zeigen:**
- FIG 1: schematisch den Aufbau und Teile des Lichtstrahlengangs in einem Photometriesystem (1) mit einer Messzelle (2) in der Aufnahmeposition (4),
- FIG 2: schematisch den Aufbau und Teile des Lichtstrahlengangs in einem Photometriesystem (1) mit einer Messzelle (2) in der Aufnahmeposition (4) und einer Blende (14) zwischen der Aufnahmeposition (4) und dem ersten Fotodetektor (6),
- FIG 3: schematisch den wannnenförmigen Messwertverlauf einer Anzahl von Messwerten des ersten Fotodetektors (6) in einem Photometriesystem (1) mit einer Messzelle (2) in der Aufnahmeposition (4),
- FIG 4: schematisch den Aufbau und Teile des Lichtstrahlengangs in einem Photometriesystem (1) mit einer Messzelle (2) in der Aufnahmeposition (4) und einer Blende (14) zwischen der Aufnahmeposition (4) und dem ersten Fotodetektor (6), und einem zweiten Fotodetektor (7) seitlich des Strahlengangs des Strahlenbündels zwischen Aufnahmeposition (4) und dem ersten Fotodetektor (6).

Gleiche Teile sind in allen Figuren mit denselben Bezugszeichen versehen.

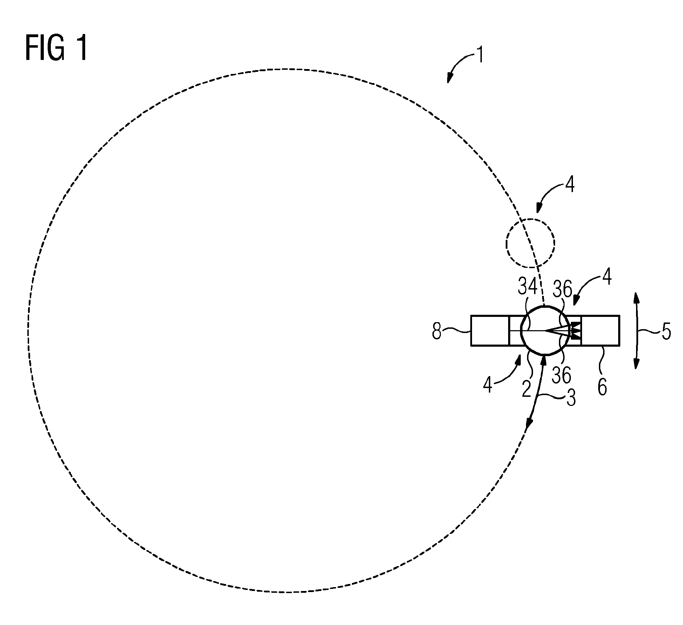

Die Photometriesysteme (1) gemäß der FIG 1, FIG 2 und FIG 4 zeigen verschiedene, bevorzugte Ausführungsformen eines erfindungsgemäßen Photometriesystems. Dabei können Gegenstände der verschiedenen, bevorzugten Ausführungsformen beliebig miteinander kombiniert werden, um weitere erfindungsmäße Ausführungsformen zu erhalten.

Das Photometriesystem (1) gemäß der FIG 1 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Transporteinrichtungen sowie eine Steuereinheit zum automatisierten Auswerten der Analysen.

Das Photometriesystem (1) umfasst zwei Aufnahmepositionen (4) für eine Messzelle (2). Es umfasst weiterhin einen ersten Fotodetektor (6), der die Stärke von Lichteinfall auf einer vorgegebenen Fläche positionsgenau messen kann und ein Mittel (8) zur Erzeugung eines Strahlenbündels, das beispielsweise eine Laserdiode (10) und eine vorgeschaltete Linse (21) umfasst (nicht gezeigt). Das Mittel (8) zur Erzeugung eines Strahlenbündels emittiert somit ein Strahlenbündel kohärenten und kollimierten Laserlichts. Das Strahlenbündel trifft auf die Messzelle (2) in der Aufnahmeposition (4). Nach Austritt aus der Messzelle (2) sind die gestreuten Anteile (36) des Strahlenbündels divergent und treffen wenigstens teilweise auf den ersten Fotodetektor (6). Der erste Fotodetektor (6) ermittelt beispielsweise die Stärke des auftreffenden Lichts.

Die Messzelle (2) in der Aufnahmeposition (4) befindet sich in mittiger Stellung zum Strahlengang des Primärstrahls (34). Die relative Messeinheitsbewegung (5) ist mit einem Pfeil angezeigt, die entsprechende relative Messzellenbewegung (3) ist ebenfalls mit einem Pfeil angezeigt. Dabei können die Aufnahmepositionen (4) ortsfest angeordnet sein und sich die Messeinheit mit dem Mittel (8) zur Erzeugung eines Strahlenbündels und dem ersten Fotodetektor (6) bewegen, und/oder die Aufnahmepositionen (4) ist beweglich, und die Messeinheit mit dem Mittel (8) zur Erzeugung eines Strahlenbündels und dem ersten Fotodetektor (6) ist ortsfest angeordnet.

Durch in der Messzelle (2) befindliche Partikel und/oder Partikelaggregate, die z.B. im Verlauf einer Antigen-Antikörper-Reaktion entstehen oder sich vermindern, wird das Strahlenbündel gestreut, so dass nur noch ein Teil ungestreut die Messzelle (2) verlässt. Bei diesem Teil handelt es sich um den Primärstrahl. Ein weiterer Teil (36) des Lichts wird gestreut, was im Allgemeinen zu einer Aufweitung des Strahlenbündels führt.

Der erste Fotodetektor (6) ist an die erwähnte Steuereinheit angeschlossen und ermöglicht eine Auswertung der Streuung des vom Mittel (8) zur Erzeugung eines Strahlenbündels emittierten Strahlenbündels. Sämtliche beschriebenen Bauteile können in einem Gehäuse (nicht gezeigt) untergebracht sein.

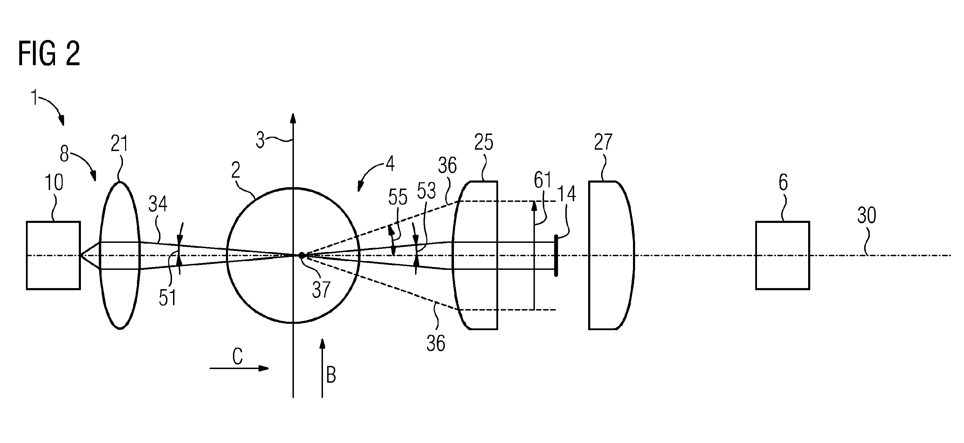

Das Photometriesystem (1) gemäß der FIG 2 ist ebenfalls eingebettet in ein nicht näher dargestelltes Analysegerät, welches zur Ausführung einer Vielzahl von Analysen von Proben ausgestaltet ist.
Das Photometriesystem (1) umfasst eine Aufnahmeposition (4) für eine Messzelle (2). Die Messzelle (2) in der

Aufnahmeposition (4) befindet sich in mittiger Stellung zum Strahlengang entlang der optischen Achse (30). Die Strahlwanderung (61) aufgrund einer relativen Messzellenbewegung (3) in der mit einem Pfeil angezeigten Richtung (B) ist mit einem Pfeil angezeigt (61).

Das Photometriesystem (1) umfasst weiterhin einen ersten Fotodetektor (6), der die Stärke von Lichteinfall auf einer vorgegebenen Fläche positionsgenau messen kann und ein Mittel (8) zur Erzeugung eines Strahlenbündels, das eine Laserdiode (10) und eine vorgeschaltete Linse (21) umfasst. Das Mittel (8) zur Erzeugung eines Strahlenbündels emittiert somit ein Strahlenbündel konvergenten Laserlichts (34). Dieses ist in die durch einen Pfeil angezeigte Richtung C gerichtet. Das Strahlenbündel bildet einen Fokus (37) in der Messzelle (2) in der Aufnahmeposition (4). Dabei spannt das konvergente Strahlenbündel zwischen der Linse (21) und der Aufnahmeposition (4) mit der optischen Achse (30) einen Winkel (51) auf.

Nach Austritt aus der Messzelle (2) ist das Strahlenbündel divergent und trifft auf eine Linse (25), die das Licht des Primärstrahls (34) parallelisiert. Dabei spannt das divergente Strahlenbündel zwischen der Aufnahmeposition (4) und der Linse (25) mit der optischen Achse (30) einen Winkel (53) auf. Nach Austritt aus der Linse (25) trifft das Strahlenbündel teilweise auf die Blende (14) und wird von dieser absorbiert und/oder reflektiert und trifft nicht auf den ersten Fotodetektor (6). Bei diesem Teil des Strahlenbündels handelt es sich im Wesentlichen um den ungestreuten Primärstrahl.

Ein anderer Teil (36) des Strahlenbündels trifft nach Austritt aus der Linse (25) auf eine Linse (27), welche diesen Teil auf den ersten Fotodetektor (6) fokussiert (teilweise gezeigt). Der Fotodetektor ermittelt beispielsweise die Stärke des auftreffenden Lichts.

Durch in der Messzelle (2) befindliche Partikel und/oder Partikelaggregate, die z.B. im Verlauf einer Antigen-Antikörper-Reaktion entstehen oder sich vermindern, wird das Strahlenbündel gestreut, so dass nur noch ein Teil ungestreut die Messzelle (2) verlässt. Bei diesem Teil handelt es sich um den Primärstrahl. Ein weiterer Teil des Lichts wird gestreut, was im Allgemeinen zu einer Aufweitung des Strahlenbündels führt.

Durch die Blende (14) wird das Licht des Primärstrahls abgetrennt. Die Linsen (21, 25, 27) sind als Sammellinsen ausgelegt.

Die Funktion der Blende (14) kann auch von einem geeigneten ersten Fotodetektor (6) erfüllt werden. Beispielsweise kann der erste Fotodetektor (6) eine Apertur aufweisen, die als Blende (14) wirkt, oder die aktive, lichtempfindliche Fläche des Detektors selbst kann aufgrund ihrer Größe und Form als Blende (14) wirken.

Der erste Fotodetektor (6) ist an die erwähnte Steuereinheit angeschlossen und ermöglicht eine Auswertung der Streuung des vom Mittel zur Erzeugung eines Strahlenbündels (8) emittierten Strahlenbündels. Sämtliche beschriebenen Bauteile können in einem Gehäuse (nicht gezeigt) untergebracht sein.

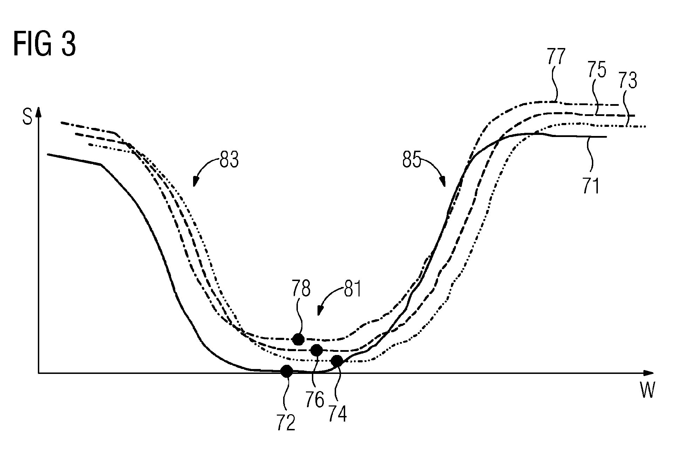

FIG 3 zeigt schematisch den wannnenförmigen Messwerteverlauf einer Anzahl von experimentell mit dem ersten Fotodetektors (6) ermittelten Messwerten (71, 73, 75, 77) von verschiedenen Messungen an der gleichen Probe in einem Photometriesystem (1) nach FIG 2 mit einer Messzelle (2) in der Aufnahmeposition (4) bei einer relativen Messeinheitsbewegung (5). In dem Diagramm sind aufgetragen die Position (W) der Messzelle (2) relativ zum Strahlengang des Primärstrahls entlang der optischen Achse (30) gegen das Signal (S) des Fotodetektors (6). Messungen an verschiedenen Proben und/oder in verschiedenen Messzellen liefern ähnliche wannnenförmige Messwerteverläufe (nicht gezeigt).

Der wannnenförmige Messwerteverlauf weist charakteristische Bereiche der Flanken (83, 85) und des Wannenbodens (81) auf. Bei mittiger Stellung des Strahlengangs des Primärstrahls (34) zur in einer Aufnahmeposition (4) angeordneten Messzelle (2) befinden sich die Messwerte bei mittiger Stellung (72, 74, 76, 78) der Messzelle (2) zum Strahlengang des Primärstrahls (34) im Bereich des jeweiligen Wannenbodens (81).

Im Bereich des Wannenbodens trifft der Primästrahl (34) vollständig auf die Blende (14). Nur Streulicht (36) trifft auf den ersten Fotodetektor (6). Im Bereich der Flanken (83, 85) trifft der Primärstrahl wenigstens teilweise, beispielsweise durch Ablenkung aufgrund der Linsenwirkung der Messzelle (2) nicht auf die Blende (14) und teilweise auf den ersten Fotodetektor (6). Dies führt zu einer Erhöhung des mit dem ersten Fotodetektor (6) gemessenen Signals aufgrund Erhöhung der Störanteile des Primärstrahls und damit zu einer Verfälschung des Messsignals des Streulichts (36).

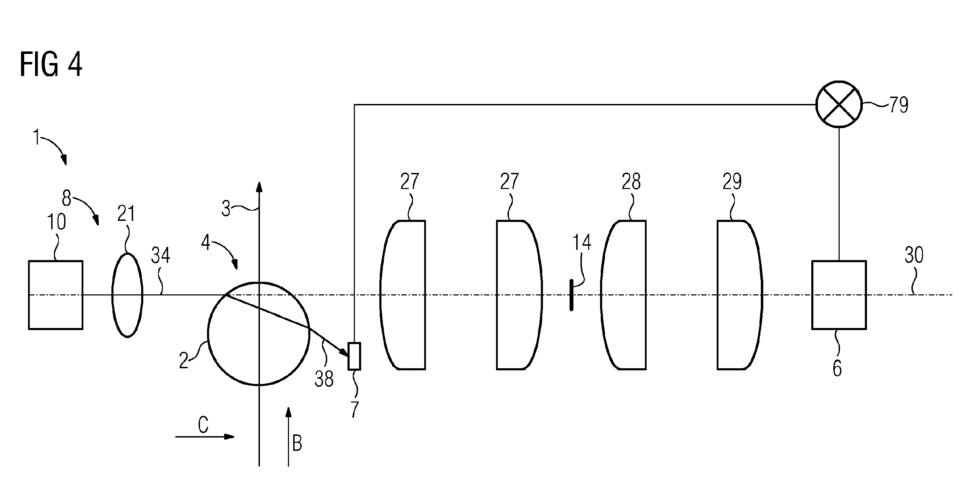

Das Photometriesystem (1) gemäß der FIG 4 ist ebenfalls eingebettet in ein nicht näher dargestelltes Analysegerät, welches zur Ausführung einer Vielzahl von Analysen von Proben ausgestaltet ist.
Das Photometriesystem (1) umfasst eine Aufnahmeposition (4) für eine Messzelle (2). Die Messzelle (2) in der Aufnahmeposition (4) befindet sich in außermittiger Stellung zum Strahlengang entlang der optischen Achse (30). Die Ablenkung von Teilen (38) des Primärstrahls (34) aufgrund einer sich in der Aufnahmeposition (4) befindenden Messzelle (2), die auf den zweiten Fotodetektor (7) treffen, ist mit einem Pfeil angezeigt. Die relative Messzellenbewegung (3) ist mit einem Pfeil, der in Richtung B zeigt, angezeigt.

Das Photometriesystem (1) umfasst weiterhin einen ersten Fotodetektor (6), der die Stärke von Lichteinfall auf einer vorgegebenen Fläche positionsgenau messen kann, und ein Mittel (8) zur Erzeugung eines Strahlenbündels, das eine Laserdiode (10) und eine vorgeschaltete Linse (21) umfasst. Das Mittel (8) zur Erzeugung eines Strahlenbündels emittiert somit ein Strahlenbündel konvergenten Laserlichts (34). Dieses ist in die durch einen Pfeil angezeigte Richtung C gerichtet.

Das Strahlenbündel bildet einen Fokus in der Messzelle (2) in der Aufnahmeposition (4) (nicht gezeigt). Dabei spannt das konvergente Strahlenbündel zwischen der Linse (21) und der Aufnahmeposition (4) mit der optischen Achse (30) einen Winkel auf (nicht gezeigt).

Nach Austritt aus der Messzelle (2) ist das Strahlenbündel divergent und trifft auf eine Linse (25), die das Licht des Primärstrahls parallelisiert. Dabei spannt das divergente Strahlenbündel zwischen der Aufnahmeposition (4) und der Linse (25) mit der optischen Achse (30) einen Winkel (53) auf (nicht gezeigt). Nach Austritt aus der Linse (25) trifft das Strahlenbündel auf die Linse (27) welches es teilweise auf die Blende (14) fokussiert, wo es von dieser absorbiert und/oder reflektiert wird, und nicht auf den ersten Fotodetektor (6) trifft. Bei diesem Teil des Strahlenbündels handelt es sich im Wesentlichen um den ungestreuten Primärstrahl.

Ein anderer Teil (36) des Strahlenbündels (nicht gezeigt) trifft nach Austritt aus der Linse (27) auf eine Linse (28) und eine Linse (29), welche diesen Teil auf den ersten Fotodetektor (6) fokussiert. Der erste Fotodetektor (6) ermittelt beispielsweise die Stärke des auftreffenden Lichts.

Durch in der Messzelle (2) befindliche Partikel und/oder Partikelaggregate, die z.B. im Verlauf einer Antigen-Antikörper-Reaktion entstehen oder sich vermindern, wird das Strahlenbündel gestreut, so dass nur noch ein Teil ungestreut die Messzelle (2) verlässt. Bei diesem Teil handelt es sich um den Primärstrahl. Ein weiterer Teil des Lichts wird gestreut, was im Allgemeinen zu einer Aufweitung des Strahlenbündels führt.

Durch die Blende (14) wird das Licht des Primärstrahls abgetrennt. Die Linsen (21, 25, 27, 28. 29) sind als Sammellinsen ausgelegt.

Die Funktion der Blende (14) kann auch von einem geeigneten ersten Fotodetektor (6) erfüllt werden. Beispielsweise kann der erste Fotodetektor (6) eine Apertur aufweisen, die als Blende (14) wirkt, oder die aktive, Lichtempfindliche Fläche des Detektors selbst kann aufgrund ihrer Größe und Form als Blende (14) wirken.

Der erste Fotodetektor (6) und der zweite Fotodetektor (7) sind an eine Auswerte- und Steuereinheit (79) angeschlossen. Diese ermöglicht hier beispielsweise eine Auswertung des Signals des ersten Fotodetektors (6) und/oder des zweiten Fotodetektors (7) sowie ggf. die Ansteuerung des ersten Fotodetektors (6) in Abhängigkeit des Signals des zweiten Fotodetektors (7).

Sämtliche beschriebenen Bauteile können in einem Gehäuse (nicht gezeigt) untergebracht sein.

### Bezugszeichenliste

- 1: Photometriesystem
- 2: Messzelle
- 3: Relative Messzellenbewegung
- 4: Aufnahmeposition
- 5: Relative Messeinheitsbewegung
- 6: Erster Fotodetektor
- 7: Zweiter Fotodetektor
- 8: Mittel zur Erzeugung eines Strahlenbündels
- 10: Lichtquelle
- 14: Blende
- 21, 25, 27, 28, 29: Linse
- 30: Optische Achse
- 34: Primärstrahl
- 36: Streulicht
- 37: Fokus
- 38: Abgelenkter Lichtstrahl
- 51, 53, 55: Winkel
- 61: Strahlwanderung
- 71, 73, 75, 77: Anzahl von Messwerten
- 72, 74, 76, 78: Messwert bei mittiger Stellung
- 79: Auswerte- und Steuereinheit
- 81: Wannenboden
- 83, 85: Flanken
- B, C: Richtung
- S: Signal
- W: Position

## Patentansprüche

1. Photometriesystem (1) mit mindestens einem Mittel (8) zur Erzeugung eines Strahlenbündels, mindestens einer Aufnahmeposition (4) für eine Messzelle (2), mindestens einer Blende (14) und mindestens einem ersten Fotodetektor und einem zweiten Fotodetektor (6, 7), wobei das Mittel (8) zur Erzeugung eines Strahlenbündels, die Aufnahmeposition (4) für eine Messzelle (2), die Blende (14) und der erste Fotodetektor (6) derart angeordnet sind, dass das Strahlenbündel durch eine in der Aufnahmeposition (4) angeordnete Messzelle (2) tritt und dass nach dem Durchtritt durch eine in der Aufnahmeposition (4) angeordnete Messzelle (2) wenigstens ein erster Teil des Strahlenbündels auf die Blende (14) trifft und wobei wenigstens ein zweiter Teil des Strahlenbündels auf den ersten Fotodetektor (6) trifft und wobei einerseits das Mittel (8) zur Erzeugung eines Strahlenbündels, die Blende (14), und der erste (6) Fotodetektor und andererseits die Aufnahmeposition (4) relativ zueinander bewegbar sind, **dadurch gekennzeichnet, dass** der
zweite Fotodetektor (7) außerhalb der Mittenachse des Strahlengangs des Strahlenbündels zwischen Aufnahmeposition (4) und dem ersten Fotodetektor (6) angeordnet ist.

2. Photometriesystem (1) nach Anspruch 1, wobei der zweite Fotodetektor (7) in einer Position angeordnet ist, in der durch Ablenkung des Strahlenbündels durch eine in der Aufnahmeposition (4) angeordnete Messzelle (2) wenigstens ein dritter Teil des Strahlenbündels auf den zweiten Fotodetektor (7) trifft und wobei der Anteil des dritten Teils des Strahlenbündels in Abhängigkeit von der Position einer in der Aufnahmeposition (4) angeordneten Messzelle (2) relativ zum Strahlengang des Strahlenbündels veränderlich ist.

3. Photometriesystem (1) nach einem der vorhergehenden Ansprüche, wobei bei mittiger Stellung einer in der Aufnahmeposition (4) angeordneten Messzelle (2) relativ zum Strahlengang des Strahlenbündels der Anteil des ersten Teils des Strahlenbündels am Strahlenbündel seinen maximalen Wert erreicht.

4. Photometriesystem (1) nach einem der vorhergehenden Ansprüche, wobei bei mittiger Stellung einer in der Aufnahmeposition (4) angeordneten Messzelle (2) relativ zum Strahlengang des Strahlenbündels der Anteil des zweiten Teils des Strahlenbündels am Strahlenbündel seinen minimalen Wert erreicht.

5. Photometriesystem (1) nach einem der vorhergehenden Ansprüche, wobei bei mittiger Stellung einer in der Aufnahmeposition (4) angeordneten Messzelle (2) relativ zum Strahlengang des Strahlenbündels der Anteil des ersten Teils des Strahlenbündels am Strahlenbündel seinen maximalen Wert erreicht und wobei der Anteil des zweiten Teils des Strahlenbündels am Strahlenbündel seinen minimalen Wert erreicht.

6. Photometriesystem (1) nach einem der vorhergehenden Ansprüche, wobei die Blende (14) in der Form eines länglichen Streifens ausgebildet ist und wobei bevorzugt die Richtung mit der längeren Ausdehnung der Blende (14) senkrecht zur Bewegungsrichtung des Mittels (8) zur Erzeugung eines Strahlenbündels, der Blende (14) und des ersten Fotodetektors (6) oder der Aufnahmeposition (4) und senkrecht zur Ausbreitungsrichtung des Strahlenbündels angeordnet ist.

7. Photometriesystem (1) nach einem der vorhergehenden Ansprüche, wobei das Photometriesystem (1) mindestens zwei Aufnahmepositionen (4) für jeweils eine Messzelle (2) aufweist.

8. Photometriesystem (1) nach Anspruch 7, wobei die mindestens zwei Aufnahmepositionen (4) für jeweils eine Messzelle (2) in einer Kreisbahn, bevorzugt in mindestens zwei konzentrischen Kreisbahnen angeordnet sind.

9. Photometriesystem (1) nach einem der vorhergehenden Ansprüche, wobei das Mittel (8) zur Erzeugung eines Strahlenbündels, die Blende (14), der erste Fotodetektor (6) und der zweite Fotodetektor (7) relativ zu der Aufnahmeposition (4) auf einer Kreisbahn bewegbar sind.

10. Photometriesystem (1) nach einem der vorhergehenden Ansprüche, wobei die Aufnahmeposition (4) zur Aufnahme einer Messzelle (2) mit ovalen oder mit runden Querschnitten geeignet ist.

11. Photometriesystem (1) nach einem der vorhergehenden Ansprüche, wobei bei leerer Messzelle (2) und/oder ohne Messzelle (2) in der Aufnahmeposition (4) der erste Teil des Strahlenbündels wenigstens teilweise nicht auf die Blende (14) trifft und wobei der erste Teil des Strahlenbündels wenigstens teilweise auf den ersten Fotodetektor (6) trifft.

12. Analysegerät umfassend ein Photometriesystem (1) nach einem der vorhergehenden Ansprüche.

13. Verfahren zur Bestimmung der Position einer in einer Aufnahmeposition (4) angeordneten Messzelle (2) relativ zum Strahlengang eines Strahlenbündels in einem Photometriesystem (1) nach einem der Ansprüche 1 - 11, **dadurch gekennzeichnet, dass** die Bestimmung der Position der in der Aufnahmeposition (4) angeordneten Messzelle (2) mittels Auswertung des Signals des zweiten Fotodetektors (7) erfolgt.

14. Verfahren zur Steuerung des Beginns und/oder des Endes der Signalaufnahme und/oder der Signalverarbeitung eines ersten Fotodetektors (6) in einem Photometriesystem (1) nach einem der Ansprüche 1 - 11, **dadurch gekennzeichnet, dass** die Steuerung des Beginns und/oder des Endes der Signalaufnahme und/oder der Signalverarbeitung des ersten Fotodetektors (6) mittels Auswertung des Signals des zweiten Fotodetektors (7) erfolgt.

15. Verfahren nach einem der Ansprüche 13 und 14, wobei das Verfahren mittels eines Analysegeräts gemäß Anspruch 12 durchgeführt wird.
